(19) Europäisches Patentamt European Patent Office Office européen des brevets

(11) **EP 4 640 638 A1**

(12) **EUROPEAN PATENT APPLICATION**

(43) Date of publication:
**29.10.2025 Bulletin 2025/44**

(21) Application number: 25163072.9

(22) Date of filing: **11.03.2025**

(51) International Patent Classification (IPC):
*C01G 53/506* (2025.01)  *H01M 4/525* (2010.01)

(52) Cooperative Patent Classification (CPC):
**H01M 4/525; C01G 53/506;** Y02E 60/10

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **11.03.2024 KR 20240034110**

(71) Applicant: SAMSUNG SDI CO., LTD.
**Yongin-si, Gyeonggi-do 17084 (KR)**

(72) Inventors:
• **KIM, Jinhwa**
  **17084 Yongin-si (KR)**

• **KANG, Taegeun**
  **17084 Yongin-si (KR)**
• **HONG, Youngjae**
  **17084 Yongin-si (KR)**
• **JANG, Jungsue**
  **17084 Yongin-si (KR)**
• **KIM, Minhan**
  **17084 Yongin-si (KR)**
• **LEE, Soonrewl**
  **17084 Yongin-si (KR)**

(74) Representative: **Marks & Clerk LLP**
**15 Fetter Lane**
**London EC4A 1BW (GB)**

(54) **PREPARATION METHODS OF POSITIVE ELECTRODE ACTIVE MATERIALS, AND RECHARGEABLE LITHIUM BATTERIES**

(57)    Disclosed are a method of preparing a positive electrode active material, a positive electrode active material prepared according to the method, a positive electrode including the positive electrode active material, and a rechargeable lithium battery including the positive electrode. The method includes (i) mixing a nickel-based precursor and a first lithium raw material and performing a first heat treatment at about 500 °C to about 750 °C to prepare a first fired product, and (ii) mixing the first fired product and a second lithium raw material and performing a second heat treatment at about 650 °C to about 850 °C to prepare a positive electrode active material in the form of secondary particles including a lithium nickel-based composite oxide, the secondary particles being formed by agglomerating a plurality of primary particles. A molar ratio ($L^1$) of lithium in the first lithium raw material to a total metal of the nickel-based precursor is about 0.2 to about 0.9, a molar ratio ($L^2$) of lithium in the second lithium raw material to a total metal excluding lithium in the first fired product is about 0.1 to about 0.8, and about $0.9 \leq L^1+L^2 \leq$ about 1.1.

FIG. 8

EP 4 640 638 A1

**Description**

**BACKGROUND**

**Field**

Preparation methods of positive electrode active materials are disclosed, along with positive electrodes comprising said positive electrode active materials, and rechargeable lithium batteries comprising said positive electrodes.

**Description of the Related Art**

A portable information device such as, e.g., a cell phone, a laptop, a smart phone, and the like, or an electric vehicle, typically uses a rechargeable lithium battery having high energy density and ready portability as a driving power source. Rechargeable lithium batteries with high energy density as a driving power source or power storage power source for hybrid or electric vehicles may be advantageous.

Various positive electrode active materials have been investigated to realize rechargeable lithium batteries for, e.g., the above applications. Among positive electrode active materials, lithium nickel-based oxide, lithium nickel-manganese-cobalt composite oxide, lithium nickel-cobalt-aluminium composite oxide, and lithium cobalt oxide are typically or mainly positive electrode active materials. Such nickel-based positive electrode active materials including nickel as a main transition metal have been actively developed recently, because nickel-based positive electrode active materials may achieve high capacity. However, there are limitations due to various problems such as structural deterioration caused by charges and discharges, surface side reactions with an electrolyte, and deterioration due to particle cracks. In particular, the nickel-based positive electrode active materials may present a challenge in their preparation in that, the higher nickel content, the higher unreacted lithium content remains during heat treatment, and in order to remove the unreacted lithium and control surface properties, a washing process is typically performed, however, this may lead to loss of lithium from inside the positive electrode active materials during the washing, which may result in reducing capacity and deteriorating the properties of the material. The properties may be restored by compensating the lost lithium, but the washing process and the compensation of the lithium raw material may significantly increase a material-processing cost. Accordingly, a method of manufacturing nickel-based positive electrode active materials achieving high performance, while improving surface properties, may be advantageous.

**SUMMARY**

The invention provides a method of preparing a high-performance nickel-based positive electrode active material that achieves high capacity, desired or improved surface properties, low residual lithium content, high pellet density, and long lifecycle characteristics, and is a novel preparation method with reduced processing costs and increased processability and productivity.

According to a first aspect of the invention there is provided a method of preparing a positive electrode active material that includes: (i) mixing a nickel-based precursor and a first lithium raw material, and performing a first heat treatment at a temperature range of about 500 °C to about 750 °C to prepare a first fired product, and (ii) mixing the first fired product and a second lithium raw material, and performing a second heat treatment at a temperature range of about 650 °C to about 850 °C to prepare a positive electrode active material in the form of secondary particles including a lithium nickel-based composite oxide, the secondary particles being formed by agglomerating a plurality of primary particles, wherein a molar ratio ($L^1$) of lithium in the first lithium raw material to a total metal of the nickel-based precursor is in a range of about 0.2 to about 0.9, a molar ratio ($L^2$) of lithium in the second lithium raw material to a total metal excluding lithium in the first fired product is in a range of about 0.1 to about 0.8, and about $0.9 \leq L^1 + L^2 \leq$ about 1.1.

According to a second aspect of the invention there is provided a positive electrode active material prepared according to the above method.

According to a third aspect of the invention there is provided a positive electrode including the aforementioned positive electrode active material.

According to a fourth aspect of the invention there is provided a rechargeable lithium battery including the aforementioned positive electrode (including the aforementioned positive electrode active material), a negative electrode, and an electrolyte.

According to the method for preparing a positive electrode active material, processing costs may be reduced, processability and productivity may be increased, and high-capacity and long lifecycle characteristics may be achieved, while providing high-performance nickel-based positive electrode active material having desired or improved surface characteristics, low residual lithium content, and high pellet density.

At least some of the above and other features of the invention are set out in the claims.

**BRIEF DESCRIPTION OF THE DRAWINGS**

FIGS. 1 to 4 are schematic diagrams showing a rechargeable lithium battery according to some example embodiments.

FIG. 5 is a scanning electron microscope (SEM) image of the first fired product of the Example.

FIG. 6 shows the results of Rietveld Refinement of X-ray Diffraction (XRD) for the first fired product of the Example.

FIGS. 7 and 8 are SEM images of the final positive electrode active material in the shape of secondary particles of the Example.

**DETAILED DESCRIPTION**

Hereinafter, example embodiments will be described in detail so that those of ordinary skill in the art can readily implement the example embodiments. However, this disclosure may be embodied in many different forms and is not construed as limited to the example embodiments set forth herein.

The terminology used herein is used to describe example embodiments only, and is not intended to limit the present disclosure. The singular expression includes the plural expression unless the context clearly dictates otherwise.

As used herein, "combination thereof" means a mixture, a laminate, a composite, a copolymer, an alloy, a blend, a reaction product, and the like of the constituents.

Herein, it should be understood that terms such as "comprises", "includes", or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

The average particle diameter may be measured by a method well known to those skilled in the art, for example, by a particle size analyzer, or by a transmission electron microscope (TEM) image or a scanning electron microscope (SEM) image. Alternatively, it is possible to obtain an average particle diameter value by measuring using a dynamic light scattering (DLS) method, performing data analysis, counting the number of particles for each particle size range, and calculating from this. Unless otherwise defined, the average particle diameter may mean the diameter ($D_{50}$) of particles having a cumulative volume of 50 volume% in the particle size distribution. As used herein, when a definition is not otherwise provided, the average particle diameter means a diameter ($D_{50}$) of particles having a cumulative volume of 50 volume% in the particle size distribution that is obtained by measuring the size (diameter or major axis length) of about 20 particles at random in a scanning electron microscope image.

Herein, "or" is not to be construed as an exclusive meaning, for example, "A or B" is construed to include A, B, A+B, and the like.

"Metal" is interpreted as a concept including ordinary metals, transition metals and metalloids (semi-metals).

When the terms "about" or "substantially" are used in this specification in connection with a numerical value, it is intended that the associated numerical value include a tolerance of $\pm 10\%$ around the stated numerical value. When ranges are specified, the range includes all values therebetween such as increments of 0.1%.

**Method of Preparing Positive Electrode Active Material**

A method of preparing a positive electrode active material includes: (i) mixing a nickel-based precursor and a first lithium raw material, and performing a first heat treatment at a temperature range of about 500 °C to about 750 °C to prepare a first fired product, and (ii) mixing the first fired product and a second lithium raw material, and performing a second heat treatment at a temperature range of about 650 °C to about 850 °C to prepare a positive electrode active material in the form of secondary particles including a lithium nickel-based composite oxide and formed by agglomerating a plurality of primary particles. A molar ratio ($L^1$) of lithium in the first lithium raw material to a total metal of the nickel-based precursor is in a range of about 0.2 to about 0.9, a molar ratio ($L^2$) of lithium in the second lithium raw material to a total metal excluding lithium in the first fired product is in a range of about 0.1 to about 0.8, and about $0.9 \leq L^1 + L^2 \leq$ about 1.1. Herein, the positive electrode active material can be expressed as a positive electrode active material for a rechargeable lithium battery or a nickel-based positive electrode active material.

The preparation method may be a no-washing method that does not include, .i.e. excludes, a water washing process. In other words, the method may be a novel method of effectively reducing unreacted lithium on the surface of the positive electrode active material, and strengthening the surface structure without going through the process of washing the positive electrode active material or intermediate products in the process of preparing the positive electrode active material. According to some example embodiments, the washing process may be omitted, thereby reducing processing costs, and the synthesis paradigm of nickel-based positive electrode active materials can be simplified.

In addition, by dividing the lithium raw material into two or more portions, e.g. the first lithium raw material for the first fired product and the second lithium raw material for the final product, productivity can be improved by increasing an amount of raw materials charged during firing. Furthermore, by dividing and adding lithium raw materials, the challenge of raw materials agglomerating can be effectively alleviated, thereby increasing process yield and improving productivity.

According to the above method, it is easier to control the content relationship, such as by adjusting molar ratios of lithium in the second heat treatment process so that the final positive electrode active material includes an excessive amount of lithium, and coating raw materials may be added, making it easier to modify the surface of the positive electrode active material and further strengthen the surface structure.

In addition, according to the above method, a positive electrode active material in the form of high quality secondary particles with uniform shape and size may be prepared.

The above method may allow control of residual lithium on the surface of the positive electrode active material prepared by the method to be about 2000 ppm or less, the shape and size of the particles to be substantially uniform, the particle surface to be substantially clean, and the Brunauer-Emmett-Teller (BET) specific surface area to be small, which may be advantageous for improving electrode density and electrolyte impregnation speed. These positive electrode active materials may achieve high capacity, long lifecycle, and desired or improved performance even under high-temperature and high-voltage conditions.

The method for preparing a positive electrode active material according to the invention includes adding the lithium raw material two or more times, by adding a first lithium raw material in process (i) and adding a second lithium raw material in process (ii). Herein, a molar ratio ($L^1$) of lithium in the first lithium raw material to a total metal of the nickel-based precursor is in a range of about 0.2 to about 0.9, for example about 0.3 to about 0.8, about 0.4 to about 0.7, about 0.5 to about 0.7, or about 0.5 to about 0.6. In addition, the molar ratio ($L^2$) of lithium in the second lithium raw material to a total metal excluding lithium in the first fired product is in a range of about 0.1 to about 0.8, for example, about 0.2 to about 0.7, about 0.3 to about 0.6, about 0.4 to about 0.6, or about 0.4 to about 0.5. A sum of $L^1+L^2$ indicates a molar ratio of lithium to a total metal excluding lithium in the final positive electrode active material, and the range is about $0.9 \leq L^1+L^2 \leq$ about 1.1, about $0.95 \leq L^1+L^2 \leq$ about 1.05, about $0.9 \leq L^1+L^2 \leq$ about 1.0, about $0.9 \leq L^1+L^2 \leq$ about 0.995, or about $1.0 \leq L^1+L^2 \leq$ about 1.1. In some embodiments, $L^1>L^2$ may be satisfied, whereas in other embodiments, $L^1$ and L2 may be designed to satisfy $L^1 \leq L^2$. By appropriately adjusting $L^1$ and $L^2$ and appropriately controlling the heat treatment temperature, a nickel-based positive electrode active material that achieves high capacity and long lifecycle may be effectively obtained.

The nickel-based precursor may include, for example, at least one of nickel-based hydroxide, nickel-based oxide, or a combination thereof. For example, the nickel-based hydroxide may be synthesized through a coprecipitation reaction, and the nickel-based oxide may be synthesized by a method such as, e.g., calcining the nickel-based hydroxide in an oxidizing atmosphere.

For example, the nickel-based precursor may be represented by Chemical Formula 11 or Chemical Formula 12:

Chemical Formula 11: $\quad Ni_{x11}M^{11}_{y11}M^{12}_{z11}(OH)_2$

wherein, in Chemical Formula 11, $0.7 \leq x11 < 1$, $0 < y11 \leq 0.3$, $0 \leq z11 \leq 0.3$, $0.9 \leq x11+y11+z11 \leq 1.1$, and $M^{11}$ and $M^{12}$ each independently are or include one or more of Al, B, Ba, Ca, Ce, Co, Cr, Cu, Fe, Mg, Mn, Mo, Nb, Si, Sn, Sr, Ti, V, W, Y, Zn, and Zr.

For example, in Chemical Formula 11, $0.7 \leq x11 \leq 0.99$, $0.01 < y11 \leq 0.3$, $0 \leq z11 \leq 0.3$; $0.8 \leq x11 \leq 0.99$, $0.01 < y11 \leq 0.2$, $0 \leq z11 \leq 0.2$; $0.85 \leq x11 < 1$, $0 < y11 \leq 0.15$, $0 \leq z11 \leq 0.15$; or $0.9 \leq x11 < 1$, $0 < y11 \leq 0.1$, $0 \leq z11 \leq 0.1$.

Chemical Formula 12: $\quad Ni_{x1}2M^{13}_{y12}M^{14}_{z12}O_{2-b12}X_{b12}$

wherein, in Chemical Formula 12, $0.7 \leq x12 < 1$, $0 < y12 \leq 0.3$, $0 \leq z12 \leq 0.3$, $0.9 < x12+y12+z12 < 1.1$, $0 \leq b12 \leq 0.1$, $M^{13}$ and $M^{14}$ each independently are or include at least one of Al, B, Ba, Ca, Ce, Co, Cr, Cu, Fe, Mg, Mn, Mo, Nb, Si, Sn, Sr, Ti, V, W, Y, Zn, and Zr, and X includes at least one of F, P, and S.

For example, in Chemical Formula 12, $0.7 \leq x12 \leq 0.99$, $0.01 < y12 \leq 0.3$, $0 \leq z12 \leq 0.3$; $0.8 \leq x12 \leq 0.99$, $0.01 < y12 \leq 0.2$, $0 \leq z12 \leq 0.2$; $0.85 \leq x12 < 1$, $0 < y12 \leq 0.15$, $0 \leq z12 \leq 0.15$; or $0.9 \leq x12 < 1$, $0 < y12 \leq 0.1$, $0 \leq z12 \leq 0.1$.

According to some example embodiments, the nickel-based precursor may be or include a precursor in the form of secondary particles, in which a plurality of primary particles are agglomerated. For example, at least some or all of the primary particles of the nickel-based precursor may be needle-shaped. The secondary particles of the nickel-based precursor may have an equal or similar particle diameter to the particle diameter of secondary particles of a final positive electrode active material. In other words, according to some example embodiments, a precursor with an equal or similar particle diameter to the particle diameter of a final positive electrode active material may be treated through an appropriate firing process, and a positive electrode active material in the form of secondary particles may be obtained. According to some example embodiments, the positive electrode active material having a uniform size and shape, and a clean surface may be obtained by minimizing the amount of lithium used at each synthesis step of the fired product and the final product to suppress the aggregation of the residual lithium material on the surface of the positive electrode active material. In addition, the positive electrode active material may be synthesized under mild conditions as a whole.

According to some example embodiments, the nickel-based precursor may include secondary particles in which a plurality of primary particles are agglomerated. That is, the secondary particles may be part of the nickel-based precursor, and after the heat treatment, become part of the positive electrode active material.

The average particle diameter ($D_{50}$) of the nickel-based precursor may be in a range of about 5 $\mu$m to about 25 $\mu$m, for example, about 8 $\mu$m to about 20 $\mu$m, about 10 $\mu$m to about 18 $\mu$m, about 12 $\mu$m to about 16 $\mu$m, or about 5 $\mu$m to about 15 $\mu$m. When the precursor has a size within any of the above ranges, as processability is improved, capacity may be increased. For example, when the precursor has too small a size, it is difficult to disperse, which may deteriorate the processability, but when the size is too large, the capacity may be reduced. Herein, the average particle diameter ($D_{50}$) indicates a size of particles having a cumulative volume of 50 volume% in the particle size distribution that is obtained by measuring the size of about 20 particles at random from a scanning electron microscope (SEM) image.

For example, a difference between the average particle diameter ($D_{50}$) of the nickel-based precursor and the average particle diameter ($D_{50}$) of the final positive electrode active material may be less than or equal to about 1 $\mu$m or less than or equal to about 0.5 $\mu$m, for example, about 0 $\mu$m to about 1 $\mu$m, or about 0.01 $\mu$m to about 0.5 $\mu$m.

The nickel-based precursor may further include zirconium in addition to the nickel. In other words, the nickel-based precursor may be or include hydroxide or oxide including nickel and zirconium. In other words, the nickel-based precursor may be or include a zirconium-doped nickel-based precursor. Herein, the zirconium may constitute a type of dopant, and may simultaneously or contemporaneously constitute a grain growth accelerator during the heat treatment. If (e.g., when) the precursor includes zirconium-doped nickel, the zirconium-doped nickel-based precursor may promote grain growth, making it possible to effectively synthesize a positive electrode active material at a lower temperature than the conventional synthesis methods, and thereby reduce or suppress agglomeration of particles and improving productivity. Existing alkaline grain growth accelerators or fluxes exhibit a disadvantage of remaining after firing and generating resistance within the positive electrode, thereby reducing the lifecycle thereof. However, when the precursor includes a zirconium-doped nickel as a raw material, impurities may not remain on the surface of the positive electrode active material particles, and lifespan characteristics can be improved. In some example embodiments, the zirconium-doped nickel-based precursor may be used to prepare a high nickel-based positive electrode active material at a relatively low firing temperature in a simple method without adding, e.g., an alkali-based grain growth accelerator or flux, and the like, thereby improving productivity and economy.

The first lithium raw material may be or include, for example, at least one of lithium hydroxide, lithium carbonate, lithium sulfate, lithium nitrate, or a combination thereof, and for example, the first lithium raw material may be or include anhydrous lithium hydroxide. The types of the first lithium raw material and the second lithium raw material may be the same or different, for example, the first lithium raw material and the second lithium raw material may be the same as each other.

If (e.g., when) anhydrous hydroxide lithium is used as or in the first and second lithium raw materials, a charged amount of the first and second raw materials may be increased in the synthesis process of a positive electrode active material, improving hourly production but decreasing unnecessary gas and moisture generated during the heat treatment, and as a result, improving processability and enhancing quality of the positive electrode active material. In addition, there may be no input of unnecessary heavy substances such as, e.g., $H_2O$ and the like, thus increasing a heat treatment yield and improving productivity.

For example, the anhydrous lithium hydroxide (LiOH) may be prepared by drying hydrated lithium hydroxide (LiOH - $H_2O$) with an average particle diameter ($D_{50}$) of about 400 $\mu$m to about 600 $\mu$m and pulverizing the dried hydrated lithium hydroxide into an average particle diameter ($D_{50}$) of about 3 $\mu$m to about 30 $\mu$m. The anhydrous lithium hydroxide may not be pulverized before the drying but may be pulverized just once for about 1 minute after the drying. The drying may be, for example, performed under vacuum conditions within a temperature range of about 50 °C to about 200 °C for about 0.5 hour to about 20 hours. The average particle diameter ($D_{50}$) of the hydrated lithium hydroxide, which is a starting material, may be, for example, about 450 $\mu$m to about 550 $\mu$m or about 480 $\mu$m to about 500 $\mu$m, and the obtained anhydrous lithium hydroxide may have an average particle diameter ($D_{50}$) of about 3 $\mu$m to about 25 $\mu$m or about 5 $\mu$m to about 20 $\mu$m.

The method of manufacturing the anhydrous lithium hydroxide may make it possible to readily obtain anhydrous lithium salt, maintain an improved or optimal process condition, and reduce a conversion rate to $Li_2CO_3$ to about 5% or less, obtaining high-purity anhydrous lithium hydroxide. If hydrous lithium hydroxide were to be pulverized, because fluidity of the powder rapidly decreases, it may be generally difficult to perform an additional process. For example, when drying is performed after the pulverizing, the fine particles may be entangled with each other and tightly agglomerated by the heat generated during the drying, which may entail another pulverizing process, or re-pulverizing process, but the agglomerated particles may be more difficult to grind due to their high agglomeration strength in the re-pulverizing process. In addition, as the number of processes increases, the conversion rate to $Li_2CO_3$ also increases due to an increase in the specific surface area, failing to obtain high-quality anhydrous lithium hydroxide. However, the method of manufacturing anhydrous lithium hydroxide according to some example embodiments, in which the anhydrous lithium hydroxide is once pulverized into a specific size under a predetermined condition after the drying, is a simple process of obtaining high-quality anhydrous lithium hydroxide, and in addition, additional processes may be readily added thereto.

The first heat treatment is performed within a temperature range of about 500 °C to about 750 °C. When the first heat treatment is performed within the above temperature range, a first fired product may have an appropriately low crystallinity and a hexagonal crystal structure and a cubic crystal structure to secure lots of lithium channels, which may increase reactivity with the second lithium raw material and thus effectively promote particle growth. A positive electrode active material prepared by applying the above first heat treatment may exhibit desired or improved surface characteristics, a uniform shape and size, a low residual lithium content, and high pellet density. When the first heat treatment temperature is greater than about 750 °C, a first fired product that may have a different crystal structure and different properties from the crystal structure and properties of some example embodiments may be synthesized, wherein the fired product has relatively high crystallinity and less reactivity with lithium during the secondary firing, failing to obtain the desired high-quality positive electrode active material.

The first heat treatment may be performed, for example, at a temperature range of about 550 °C to about 750 °C, about 600 °C to about 750 °C, about 650 °C to about 750 °C, or about 700 °C to about 750 °C. For example, the first heat treatment temperature may be lower than the second heat treatment temperature described later. The first heat treatment may be performed for about 6 to about 12 hours, or for about 8 to about 12 hours, and may be performed in an oxidizing atmosphere. When the first heat treatment is performed within the temperature ranges above and under the above conditions, a positive electrode active material having desired or improved surface characteristics, high pellet density due to a uniform shape and size, and a low residual lithium content, may be effectively prepared.

In some example embodiments, when the nickel-based first lithium raw material is mixed, a zirconium raw material may be mixed together. Zirconium of the zirconium raw material may constitute a type of dopant, and at the same time may be configured as a grain growth accelerator. If (e.g., when) the zirconium raw material is added, the zirconium raw material may promote grain growth, making it possible to effectively synthesize a positive electrode active material at a lower temperature than the conventional synthesis methods, which may reduce or suppress agglomeration of particles, thereby, improving productivity. Conventional alkali-based grain growth accelerators or fluxes may exhibit a challenge of remaining after the firing, may generate a resistance inside a positive electrode and thus deteriorate a lifecycle. However, the zirconium raw material would be a dopant of the positive electrode active material and would not remain on the positive electrode active material particle surface, thereby improving lifecycle characteristics. In some example embodiments, the zirconium raw material may be configured to effectively prepare a high nickel-based positive electrode active material without adding alkali-based grain growth accelerators, fluxes, or the like, at a relatively low firing temperature in a simple method, which may improve productivity and economy.

A zirconium content of the zirconium raw material may be in a range of about 0.01 mol% to about 1 mol%, for example about 0.01 mol% to about 0.9 mol%, about 0.05 mol% to about 0.7 mol%, about 0.1 mol% to about 0.5 mol%, or about 0.1 mol% to about 0.3 mol% based on 100 mol% of a total metal content of the nickel-based precursor and the zirconium of the zirconium raw material. In addition, a zirconium content of the zirconium raw material may be about 0.01 wt% to about 1 wt%, for example about 0.01 wt% to about 0.9 wt%, about 0.05 wt% to about 0.7 wt%, about 0.1 wt% to about 0.5 wt%, or about 0.1 wt% to about 0.3 wt% based on 100 wt% of a total metal of the nickel-based precursor and the zirconium of the zirconium raw material. When the zirconium content satisfies any of the above ranges, secondary particles of uniform size may be effectively prepared at low temperatures.

The zirconium raw material may be a compound including zirconium and may be or include, for example, zirconium oxide ($ZrO_2$).

The method for preparing a positive electrode active material according to some example embodiments may include no pulverizing process, and may include grinding into artificial microscale particles due to a low agglomeration degree after the first heat treatment. However, the method may include at least a coarse crushing and deagglomeration process (a process of dropping powder of secondary particles) for air transport. The crushing process alone may generate a positive electrode active material with a $Ds_o$ difference of about 0.01 $\mu$m to about 0.5 $\mu$m from a precursor thereof.

The first fired product obtained through the first heat treatment may include lithium nickel-based composite oxide in the form of secondary particles formed by agglomerating a plurality of primary particles. The secondary particles in the first fired product, may have the same or similar average particle diameters ($D_{50}$) to the final positive electrode active material, for example, about 5 μm to about 25 μm, about 8 μm to about 20 μm, about 10 μm to about 18 μm, about 12 μm to about 16 μm, or about 5 μm to about 15 μm. For example, the average particle diameter ($D_{50}$) of the first fired product and the average particle diameter ($D_{50}$) of the final positive electrode active material may have a difference of less than or equal to about 1 μm or less than or equal to about 0.5 μm, for example, about 0 μm to about 1 μm or about 0.01 μm to about 0.5 μm.

In addition, the lithium nickel-based composite oxide of the first fired product may have a hexagonal crystal structure and a cubic crystal structure. For example, about 60 vol% to about 95 vol%, about 70 vol% to about 95 vol%, or about 75 vol% to about 90 vol% of the first fired product may include a hexagonal crystal structure, and about 5 vol% to about 40 vol%, about 5 vol% to about 30 vol%, or about 10 vol% to about 25 vol% of the first fired product may include a cubic crystal structure. Herein, the first fired product may have high reactivity with the second lithium raw material and an advantage of growing into secondary particles with a uniform size, and may effectively reduce residual lithium on the final positive electrode active material surface. The crystal structure of the first fired product may be, for example, analyzed and characterized by the X-ray diffraction (XRD) Rietveld Refinement method.

The second lithium raw material may be or include, for example, at least one of lithium hydroxide, lithium carbonate, lithium sulfate, lithium nitrate, or a combination thereof, for example, anhydrous lithium hydroxide. As discussed earlier, the types of the first lithium raw material and the second lithium raw material may be the same or different, for example, the first lithium raw material and the second lithium raw material may be the same lithium raw material. In the method according to the invention, the molar ratio ($L^2$) of lithium in the second lithium raw material to a total metal excluding lithium in the first fired product is in the range of about 0.1 to about 0.8 as described above, and for example about 0.2 to about 0.7, about 0.3 to about 0.6, about 0.4 to about 0.6, or about 0.4 to about 0.5. $L^2$ may be appropriately adjusted to prepare a high-performance positive electrode active material that may have high lithium usable capacity and a low residual lithium content on the surface.

In the method according to the invention, the second heat treatment is performed within a temperature range of about 650 °C to about 850 °C, for example, about 700 °C to about 830 °C, or about 750 °C to about 810 °C. In addition, the second heat treatment may proceed for about 10 hours to about 16 hours, or about 12 hours to about 16 hours, in an oxidizing atmosphere. When the second heat treatment proceeds under the above conditions, secondary particles with a uniform size may be prepared, contributing to obtaining a positive electrode active material having high lithium usable capacity and a low residual lithium content on the surface.

According to some example embodiments, when the first fired product is mixed with the second lithium raw material, a coating raw material may be mixed together to enable coating the positive electrode active material particle surface in a simple method. The coating raw material may include, for example, one or more of Al, B, Co, Mg, V, Zn, and Zr. A content of the coating elements may vary depending on types of elements, for example, about 0.1 wt% to about 5 wt% or about 0.5 wt% to about 3 wt% based on 100 wt% of the total metal content, excluding lithium, in the positive electrode active material. Such coating process may be a simple dry-coating method without any washing process, rather than a conventional wet-coating method which includes adding the coating raw material, while washing the fired product, and subsequently drying and heat-treating the fired product.

In addition, the second lithium raw material and the coating raw materials may be heat-treated together to achieve a desired grain boundary coating on the interface (grain boundary) of the inside/outside of the secondary particles. In other words, the coating process may effectively form both a coating layer on the secondary particle surface and a grain boundary coating portion on the surface of the primary particles inside the secondary particles, providing a positive electrode active material having more structural stability and desired or improved lifecycle characteristics. The coating layer and the grain boundary coating portion may include at least one of Al, B, Co, Mg, V, Zn, Zr, or a combination thereof.

For example, the method of preparing a positive electrode active material may include mixing the first fired product with the second lithium raw material and the coating raw material, e.g. cobalt raw material, together, and performing the secondary heat treatment to provide a positive electrode active material with improved lifecycle characteristics. Herein, a content of cobalt as the coating elements may be in a range of about 0.1 wt% to about 3 wt%, or about 0.5 wt% to about 2 wt% based on 100 wt% of the total metal excluding lithium in the positive electrode active material.

The method for preparing a positive electrode active material according to some example embodiments may further include a pulverizing process after the second heat treatment. Grinding productivity may be increased by applying mild pulverizing. The pulverizing may be performed, for example, through a colloidal-mill, mild jet-mill, or mild air classifier mill.

The prepared positive electrode active material includes lithium nickel-based composite oxide, and is in the form of secondary particles formed by agglomerating a plurality of primary particles. The prepared positive electrode active material may exhibit a layered crystal structure, unlike the first fired product, which exhibits, for example, a hexagonal crystal structure and a cubic crystal structure. For example, the lithium nickel-based composite oxide may be represented by Chemical Formula 1:

Chemical Formula 1: $\quad$ $Li_{a1}Ni_{x1}M^1{}_{y1}M^2{}_{z1}O_{2-b1}X_{b1}$

wherein, in Chemical Formula 1, $0.8 < a1 < 1.2$, $0.7 \leq x1 < 1$, $0 < y1 \leq 0.3$, $0 \leq z1 \leq 0.3$, $0.9 \leq x1+y1+z1 \leq 1.1$, and $0 \leq b1 \leq 0.1$, $M^1$ and $M^2$ each independently are or include at least one of Al, B, Ba, Ca, Ce, Co, Cr, Cu, Fe, Mg, Mn, Mo, Nb, Si, Sn, Sr, Ti, V, W, Y, Zn, and Zr, and X is or includes at least one of F, P, and S.

As an example, the lithium nickel-based composite oxide may be represented by Chemical Formula 2 or Chemical Formula 3:

Chemical Formula 2:     $Li_{a2}Ni_{x2}CO_{y2}M^3_{z2}O_{2-b2}X_{b2}$

wherein, in Chemical Formula 2, $0.9 \leq a2 \leq 1.2$, $0.7 \leq x2 < 1$, $0 < y2 \leq 0.3$, $0 \leq z2 \leq 0.3$, $0.9 \leq x2+y2+z2 \leq 1.1$, and $0 \leq b2 \leq 0.1$, $M^3$ is or includes at least one of Al, B, Ba, Ca, Ce, Cr, Cu, Fe, Mg, Mn, Mo, Nb, Si, Sn, Sr, Ti, V, W, Y, Zn, and Zr, and X is or includes at least one of F, P, S, or a combination thereof.

For example, in Chemical Formula 2, $0.8 :: S : x2 :: S : 0.99$, $0.01 \leq y2 \leq 0.2$, and $0 \leq z2 \leq 0.2$; or $0.9 \leq x2 \leq 0.99$, $0.01 \leq y2 \leq 0.1$, and $0 :: S : z2 :: S : 0.1$.

Chemical Formula 3:     $Li_{a3}N i_{X3}Co_{y3}M^4_{z3}M^s_{w3}O2-b3X_{b3}$

wherein, in Chemical Formula 3, $0.9 \leq a3 \leq 1.2$, $0.7 \leq x3 \leq 0.98$, $0.01 \leq y3 \leq 0.29$, $0.01 \leq z3 \leq 0.29$, $0 \leq w3 \leq 0.29$, $0.9 \leq x3+y3+z3+w3 \leq 1.1$, and $0 \leq b3 \leq 0.1$, $M^4$ is or includes one or more of Al, Mn, or a combination thereof, $M^5$ is or includes one or more of B, Ba, Ca, Ce, Cr, Cu, Fe, Mg, Mo, Nb, Si, Sn, Sr, Ti, V, W, Y, Zn, and Zr, and X is or includes one or more of F, P, S, or a combination thereof.

For example, in Chemical Formula 3 $0.8 \leq x3 \leq 0.98$, $0.01 \leq y3 \leq 0.19$, $0.01 \leq z3 \leq 0.19$, and $0 \leq w3 \leq 0.19$; $0.9 \leq x3 \leq 0.98$, $0.01 \leq y3 \leq 0.09$, $0.01 \leq z3 \leq 0.09$, and $0 \leq w3 \leq 0.09$.

Production of such a high nickel-based positive electrode active material, as described above, may include a washing process, because an excessive amount of residual lithium may be generated on the particle surface during the synthesis process. The washing process may remove a lithium compound alone such as, e.g., $Li_2CO_3$, LiOH, and the like, from the surface of positive electrode active material particles, but also remove even active lithium inside the positive electrode active material, changing the crystal structure or causing a phase change as well as decreasing reversible capacity, and thereby deteriorating performance. For example, lithium may be eluted and changed from lithium-nickel-oxides and the like to nickel-oxides and the like, for example, NiO, and accordingly, there a type of reduction reaction may occur in which the oxidation number of Ni decreases from 3+ to 2+. The compounds such as NiO and the like may not be converted into lithium-containing compounds and thus promote a side reaction of the positive electrode active material particle surface with an electrolyte as well as reduce reversible capacity, thereby, deteriorating overall performance. In order to address the above, after the washing process, a process of restoring the deteriorated surface though additional compensation of lithium may be performed, but another challenge of causing an additional side reaction and increasing a processing cost may occur.

In contrast to the above, the method of preparing a positive electrode active material according to the invention may omit the washing process, and may thus address the performance degradation challenge that is due to the washing. The method according to the invention may also decreases a residual lithium content on the surface to about 2000 ppm or less, thus generating a positive electrode active material with desired or improved surface characteristics. The residual lithium content on the surface of the positive electrode active material may be, for example, less than or equal to about 2000 ppm, less than or equal to about 1900 ppm, or less than or equal to about 1800 ppm.

The prepared positive electrode active material may have an average particle diameter ($D_{50}$) of about 5 μm to about 25 μm, about 8 μm to about 20 μm, about 10 μm to about 18 μm, about 12 μm to about 16 μm, or about 5 μm to about 15 μm. In addition, $(D_{90}-D_{10})/D_{50}$ (the standard deviation around the mean value or the span) of the positive electrode active material may be less than or equal to about 1.2. The average particle diameter ($D_{50}$) indicates a size of particles having a cumulative volume of 50 volume% in the particle size distribution that is obtained by measuring the size of about 20 particles at random from a SEM image. $D_{90}$ is a particle size at a cumulative volume of about 90 volume% in the particle distribution, and $D_{10}$ is a particle size at a cumulative volume of about 10 volume%.

In addition, the positive electrode active material may exhibit a low specific surface area, for example, a BET specific surface area of the positive electrode active material may be in a range of about 0.2 m²/g to about 0.7 m²/g or about 0.3 m²/g to about 0.6 m²/g.

The positive electrode active material may exhibit a low specific surface area and have a clean surface, and may thus have a high pellet density. For example, the pellet density of the positive electrode active material may be in a range of about 3.0 g/cc to about 3.6 g/cc, or about 3.2 g/cc to about 3.4 g/cc. A rechargeable lithium battery, to which such a positive electrode active material is applied, may implement a high energy density. The pellet density may be measured in the following method. About 3g of the positive electrode active material is weighed, added to a mold (area: about 1.298 cm²), and a mold bar slowly inserted into a mold main body. The mold set is placed in a hydraulic press and pressurized at about 3 tons for about 30 seconds to measure a height and thus pellet density.

In addition, the positive electrode active material may have a tap density of about 1.2 g/cc to about 2.2 g/cc, for example, about 1.4 g/cc to about 2.0 g/cc. The tap density may be, for example, measured by using a tap density measuring device (TAP-2S, Logan Instruments Corp.), by adding about 50 cc of the positive electrode active material powder to a 100 cc-mass cylinder, repeatedly tapping (about 1000 times) the positive electrode active material powder by dropping the cylinder from a height of about 3 mm per second, and dividing the mass thereof by the volume thereof.

The positive electrode active material may have a ratio of peak intensity of a (003) plane to the peak intensity of a (104) plane of $I_{(003)}/I_{(104)}$ in a range greater than or equal to about 1, greater than or equal to about 1.15, or greater than or equal to about 2, for example, about 1.15 to about 1.35, or about 1.2 to about 1.35, in XRD analysis.

In some example embodiments, the positive electrode active material obtained through the second heat treatment may be mixed with a coating raw material ,and further heat-treated a third time. Through this, desired coating may proceed on the surface of the positive electrode active material - with no washing process - by a simple method. The coating raw material may include, for example, one or more of Al, B, Co, Mg, V, Zn, and Zr. Herein, a content of the coating elements is not particularly limited but may be, for example, about 0.1 wt% to about 5 wt% or about 0.5 wt% to about 3 wt% based on 100 wt% of the total metal, excluding lithium, in the final positive electrode active material.

For example, the method for preparing a positive electrode active material according to some example embodiments may include mixing the positive electrode active material obtained through the second heat treatment with a boron raw material, and performing a third heat treatment within a temperature range of about 250 °C to about 450 °C for about 2 hours to about 8 hours, through which a positive electrode active material with improved lifecycle characteristics may be prepared. Herein, a boron content may be in a range of about 0.01 wt% to about 0.5 wt% or about 0.05 wt% to about 0.3 wt% based on 100 wt% of the total metal excluding lithium in the final positive electrode active material.

### Positive Electrode

The present invention also provides a positive electrode for a rechargeable lithium battery including the aforementioned positive electrode active material. The positive electrode includes a positive electrode current collector and a positive electrode active material layer on the positive electrode current collector, the positive electrode active material layer being the aforementioned positive electrode active material. The positive electrode active material layer may further include other types of positive electrode active materials in addition to the aforementioned positive electrode active material, and may optionally further include a binder, a conductive material, or a combination thereof.

#### Binder

The binder may improve the binding properties of positive electrode active material particles with one another and with a current collector. Examples of the binder may include at least one of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but are not limited thereto.

#### Conductive Material

The conductive material may be included to provide electrode conductivity, and any electrically conductive material may be a conductive material unless the electrically conductive material causes a chemical change in the battery. Examples of the conductive material may include a carbon-based material such as at least one of natural graphite, artificial graphite, carbon black, acetylene black, ketjen black, a carbon fiber, a carbon nanofiber, a carbon nanotube, and/or the like; a metal-based material of a metal powder or a metal fiber including at least one of copper, nickel, aluminium, silver, and/or the like; a conductive polymer such as a polyphenylene derivative; or a mixture thereof.

The content of each of the binder and the conductive material may be in a range of about 0.5 wt% to about 5 wt% based on 100 wt% of the positive electrode active material layer.

The positive electrode current collector may include Al, but is not limited thereto.

The positive electrode according to some example embodiments may achieve high mixture density. For example, a density of the positive electrode active material layer may be about 3.35 g/cc to about 3.85 g/cc, or about 3.45 g/cc to about 3.75 g/cc. The density of the positive electrode active material layer refers to the ratio of the weight to the volume of the pressed positive active material layer. The density of the positive electrode active material layer can be measured by measuring a cross-sectional area, thickness and weight of the positive active material layer excluding the positive electrode current collector, calculating the volume by multiplying the cross-sectional area and the thickness, and dividing the weight by the volume. The positive electrode active material according to some example embodiments may achieve positive electrode densities, and a positive electrode, which satisfies the above positive electrode density ranges, may be appropriate for implementing a high-capacity and high-energy density rechargeable lithium battery.

## Rechargeable Lithium Battery

The present invention further provides a rechargeable lithium battery including the aforementioned positive electrode, a negative electrode, and an electrolyte. As an example, the rechargeable lithium battery may include a positive electrode, a negative electrode, a separator between the positive electrode and the negative electrode, and an electrolyte solution.

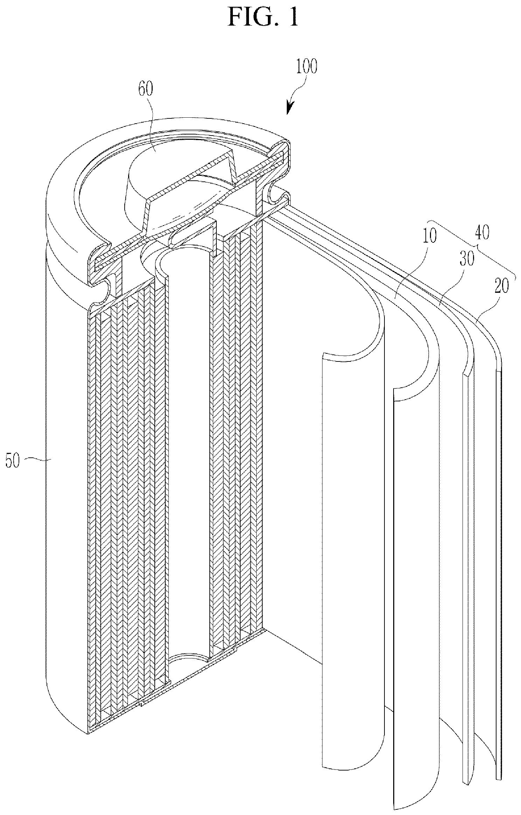

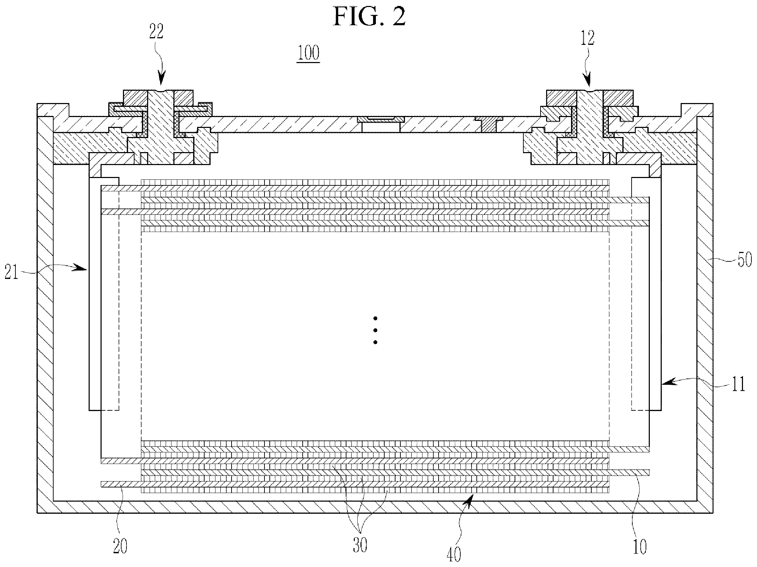

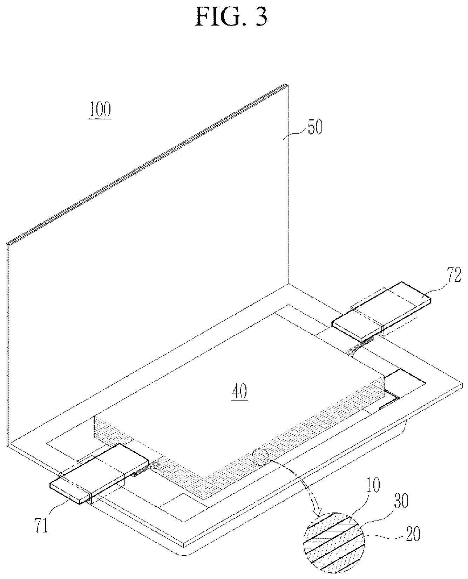

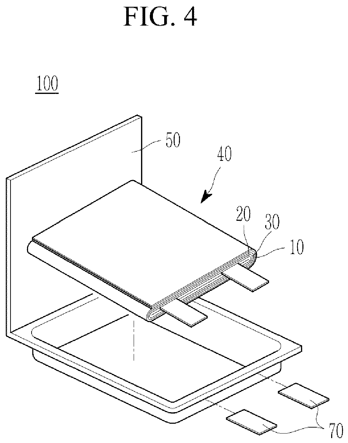

The rechargeable lithium battery may be classified into cylindrical, prismatic, pouch, coin, etc. depending on the shape. FIGS. 1 to 4 are schematic views showing the rechargeable lithium battery according to some example embodiments, where FIG. 1 is a cylindrical battery, FIG. 2 is a prismatic battery, and FIGS. 3 and 4 are each pouch-shaped batteries. Referring to FIGS. 1 to 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealing member 60 that seals the case 50, as shown in FIG. 1. Additionally, in FIG. 2, the rechargeable lithium battery 100 may include a positive electrode lead tab 11, a positive electrode terminal 12, a negative lead tab 21, and a negative electrode terminal 22. As shown in FIGS. 3 and 4, the rechargeable lithium battery 100 includes an electrode tab 70 illustrated in FIG. 4, or a positive electrode tab 71 and a negative electrode tab 72 illustrated in FIG. 3, the tabs 70/71/72 forming an electrical path for inducing the current formed in the electrode assembly 40 to the outside.

## Negative Electrode

The negative electrode may include a current collector and a negative electrode active material layer on the current collector, and the negative electrode active material layer may further include a negative electrode active material, a binder, a conductive material, or a combination thereof.

### Negative Electrode Active Material

The negative electrode active material may include at least one of a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example crystalline carbon, amorphous carbon, or a combination thereof as a carbon-based negative electrode active material. The crystalline carbon may be irregular, or sheet, flake, spherical, or fiber shaped natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include silicon, a silicon-carbon composite, $SiO_x$ ($0 < x \leq 2$), a Si-Q alloy (wherein Q is an element including at least one of an alkali metal, an alkaline-earth metal, a Group 13 element, a Group 14 element (excluding Si), a Group 15 element, a Group 16 element, a transition metal, a rare earth element, and a combination thereof, for example at least one of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof), or a combination thereof. The Sn-based negative electrode active material may be or include at least one of Sn, $SnO_2$, a Sn alloy, or a combination thereof.

The silicon-carbon composite may be or include a composite of silicon and amorphous carbon. An average particle diameter ($D_{50}$) of the silicon-carbon composite particles may be, for example, about 0.5 $\mu$m to about 20 $\mu$m. According to some example embodiments, the silicon-carbon composite may be in the form of silicon particles and amorphous carbon coated on the surface of the silicon particles. For example, the silicon-carbon composite may include a secondary particle (core) in which silicon primary particles are assembled, and an amorphous carbon coating layer (shell) on the surface of the secondary particle. The amorphous carbon may also be present between the silicon primary particles, for example, the silicon primary particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core. The crystalline carbon may be or include artificial graphite, natural graphite, or a combination thereof. The amorphous carbon may include at least one of soft carbon or hard carbon, a mesophase pitch carbonized product, and calcined coke.

When the silicon-carbon composite includes silicon and amorphous carbon, a content of silicon may be in a range of about 10 wt% to about 50 wt% and a content of amorphous carbon may be in a range of about 50 wt% to about 90 wt% based on 100 wt% of the silicon-carbon composite. In addition, when the composite includes silicon, amorphous carbon, and crystalline carbon, a content of silicon may be in a range of about 10 wt% to about 50 wt%, a content of crystalline carbon may be in a range of about 10 wt% to about 70 wt%, and a content of amorphous carbon may be in a range of about 20 wt% to about 40 wt% based on 100 wt% of the silicon-carbon composite.

Additionally, a thickness of the amorphous carbon coating layer may be in a range of about 5 nm to about 100 nm. An average particle diameter ($D_{50}$) of the silicon particles (primary particles) may be in a range of about 10 nm to about 1 $\mu$m, or about 10 nm to about 200 nm. The silicon particles may exist as silicon alone, in the form of a silicon alloy, or in an oxidized form. The oxidized form of silicon may be represented by $SiO_x$ ($0<x\leq2$). At this time, the atomic content ratio of Si:O, which indicates a degree of oxidation, may be in a range of about 99:1 to about 33:67. As used herein, when a definition is not otherwise provided, an average particle diameter ($D_{50}$) indicates a particle where an accumulated volume is about 50 volume% in a particle distribution.

The Si-based negative electrode active material or Sn-based negative electrode active material may be mixed with the carbon-based negative electrode active material. When the Si-based negative electrode active material or Sn-based negative electrode active material and the carbon-based negative electrode active material are mixed, the mixing ratio of the Si-based or Sn-based negative electrode active material to the carbon-based negative electrode active material may be a weight ratio of about 1:99 to about 90:10.

Binder

The binder may be configured to adhere the negative electrode active material particles to each other, and also to adhere the negative electrode active material to the current collector. The binder may be or include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene-propylene copolymer, polystyrene, polyurethane, polytetrafluoroethylene, polyvinylidene fluoride, polyethylene, polypropylene, polyamideimide, polyimide, and/or a combination thereof.

The aqueous binder may include at least one of a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene-propylene-diene copolymer, polyvinylpyridine, chlorosulfonated polyethylene, latex, a polyester resin, a (meth)acrylic resin, a phenol resin, an epoxy resin, polyvinyl alcohol, and/or a combination thereof.

When an aqueous binder is the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed. The alkali metal may be or include at least one of Na, K, or Li.

The dry binder may be or include a polymer material capable of becoming fiber, and may be or include, for example, at least one of polytetrafluoroethylene, polyvinylidene fluoride, a polyvinylidene fluoride-hexafluoropropylene copolymer, polyethylene oxide, and/or a combination thereof.

Conductive Material

The conductive material may be included to provide electrode conductivity, and any electrically conductive material may be a conductive material unless the electrically conductive material causes a chemical change. Examples of the conductive material include a carbon-based material such as or including at least one of natural graphite, artificial graphite, carbon black, acetylene black, ketjen black, a carbon fiber, a carbon nanofiber, a carbon nanotube, and the like; a metal-based material of a metal powder or a metal fiber including at least one of copper, nickel, aluminium, silver, and the like; a conductive polymer such as a polyphenylene derivative; and/or a mixture thereof.

A content of the negative electrode active material may be in a range of about 95 wt% to about 99.5 wt% based on 100 wt% of the negative electrode active material layer, and a content of the binder may be in a range of about 0.5 wt% to about 5 wt% based on 100 wt% of the negative electrode active material layer. For example, the negative electrode active material layer may include about 90 wt% to about 99 wt% of the negative electrode active material, about 0.5 wt% to about 5 wt% of the binder, and about 0.5 wt% to about 5 wt% of the conductive material.

Current Collector

The negative electrode current collector may include, for example, at least one of indium (In), copper (Cu), magnesium (Mg), stainless steel, titanium (Ti), iron (Fe), cobalt (Co), nickel (Ni), zinc (Zn), aluminium (Al), germanium (Ge), lithium (Li), or an alloy thereof, and may be in the form of a foil, sheet, or foam. A thickness of the negative electrode current collector may be, for example, about 1 μm to about 20 μm, about 5 μm to about 15 μm, or about 7 μm to about 10 μm.

## Electrolyte

For example, the electrolyte for a rechargeable lithium battery may be an electrolyte solution, which may include a non-aqueous organic solvent and a lithium salt.

The non-aqueous organic solvent may be a medium for transmitting ions taking part in the electrochemical reaction of a battery. The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like. The ether-based solvent may include at least one of dibutyl ether, tetraethylene glycol dimethyl ether (tetraglyme), bis(2-methoxyethyl) ether (diglyme), dimethoxyethane, 2-methyltetrahydrofuran, 2,5-dimethyltetrahydrofuran, tetrahydrofuran, and/or the like. In addition, the ketone-based solvent may include cyclohexanone, and/or the like. The alcohol-based solvent may include at least one of ethanol, isopropyl alcohol, and/or the like and the aprotic solvent may include at least one of nitriles such as R-CN (wherein R is a C2 to C20 linear, branched, or cyclic hydrocarbon group, a double bond, an aromatic ring, or an ether group, and/or the like); amides such as dimethylformamide; dioxolanes such as 1,3-dioxolane, 1,4-dioxolane, and/or the like; sulfolanes, and/or the like.

The non-aqueous organic solvent may be used alone or in a mixture of two or more types, and when two or more types of non-aqueous organic solvents are included in a mixture, a mixing ratio may be appropriately adjusted according to the desired battery performance, which is widely known to those working in the field.

When using a carbonate-based solvent, a cyclic carbonate and a chain carbonate may be mixed, and the cyclic carbonate and the chain carbonate may be mixed in a volume ratio of about 1:1 to about 1:9.

The non-aqueous organic solvent may further include an aromatic hydrocarbon-based organic solvent. For example, a carbonate-based solvent and an aromatic hydrocarbon-based organic solvent may be mixed in a volume ratio of about 1:1 to about 30:1.

The electrolyte solution may further include at least one of vinyl ethylene carbonate, vinylene carbonate, or an ethylene carbonate-based compound to improve battery lifecycle.

Examples of the ethylene carbonate-based compound may include at least one of fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent supplies lithium ions in a battery, enables a basic operation of a rechargeable lithium battery, and improves transportation of the lithium ions between positive and negative electrodes. Examples of the lithium salt may include at least one of $LiPF_6$, $LiBF_4$, $LiSbF_6$, $LiAsF_6$, $LiClO_4$, $LiAlO_2$, $LiAlCl_4$, $LiPO_2F_2$, $LiCl$, $LiI$, $LiN(SO_3C_2F_3)_2$, $Li(FSO_2)_2N$ (lithium bis(fluorosulfonyl) imide; LiFSI), $LiC_4F_9SO3$, $LiN(C_{xF2x+1SO2})(C_yF_{2y+1SO2})$ (wherein x and y are integers of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

A concentration of lithium salt may be within the range of about 0.1 M to about 2.0 M. When the concentration of lithium salt is within the above range, the electrolyte solution has appropriate ionic conductivity and viscosity, and thus desired or improved performance can be achieved and lithium ions can move effectively.

## Separator

Depending on the type of the rechargeable lithium battery, a separator may be present between the positive electrode and the negative electrode. The separator may include at least one of polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be or include a polymer film formed of or including any one polymer including at least one of polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g. TEFLON™), and/or a copolymer or mixture of two or more thereof.

The porous substrate may have a thickness of about 1 $\mu$m to about 40 $\mu$m, for example, about 1 $\mu$m to about 30 $\mu$m, about 1 $\mu$m to about 20 $\mu$m, about 5 $\mu$m to about 15 $\mu$m, or about 10 $\mu$m to about 15 $\mu$m.

The organic material may include a (meth)acrylic copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles including at least one of $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof, but is not limited thereto. An average particle diameter ($D_{50}$) of the inorganic particles may be in a range of about 1 nm to about 2000 nm, for example, about 100 nm to about 1000 nm, or about 100 nm to about 700 nm.

The organic material and the inorganic material may be mixed in one coating layer, or a coating layer including an organic material and a coating layer including an inorganic material may be stacked.

The thickness of the coating layer may be in a range of about 0.5 $\mu$m to about 20 $\mu$m, for example, about 1 $\mu$m to about 10 $\mu$m, or about 1 $\mu$m to about 5 $\mu$m.

Examples and comparative examples of the present disclosure are described below. However, the following examples are only examples of the present disclosure, and the present disclosure is not limited to the following examples.

## Examples

### Preparation of Positive Electrode Active Material

Nickel-based hydroxide $Ni_{0.94}CO_{0.04}Mn_{0.02}(OH)_2$ with an average particle diameter ($D_{50}$) of about 12 $\mu$m, anhydrous lithium hydroxide as a first lithium raw material, and $ZrO_2$ were mixed and subjected to a first heat treatment at 750 °C for 12 hours. Herein, the first lithium raw material was mixed so that a molar ratio ($L^1$) of lithium to a total metal of the nickel-based hydroxide was 0.6. In addition, $ZrO_2$ was mixed so that Zr was included in an amount of 0.125 wt% relative to 100 wt% of a sum of total metal of the nickel-based hydroxide and Zr of $ZrO_2$.

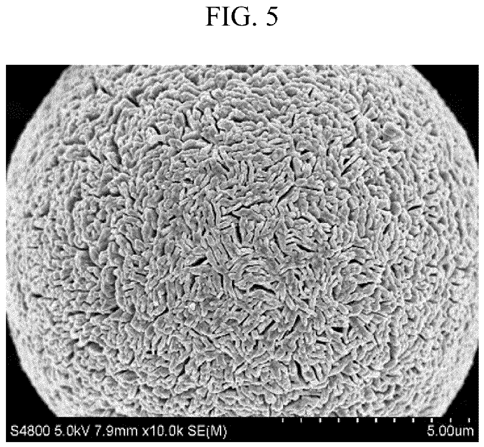

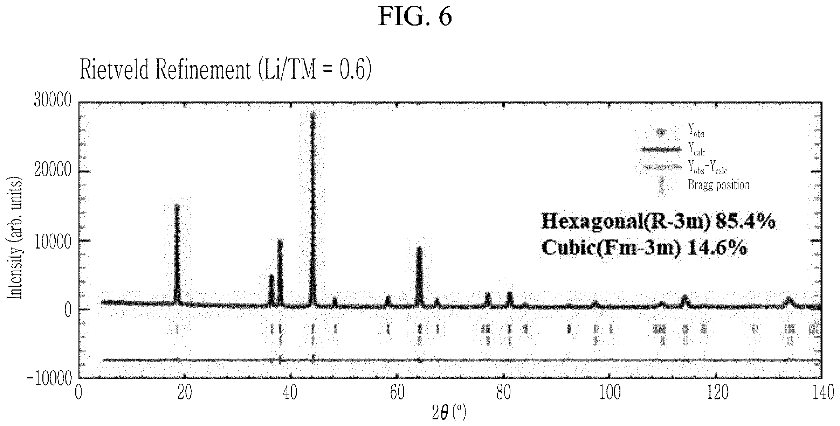

An SEM image of a first fired product obtained through the first heat treatment is shown in FIG. 5, and the XRD Rietveld Refinement result of the first fired product is shown in FIG. 6. Referring to FIG. 5, the first fired product was in a form of secondary particles formed by agglomerating a plurality of primary particles and having a size of about 11 $\mu$m to 13 $\mu$m. Referring to FIG. 6, the first fired product was confirmed to have 85.4% of a hexagonal crystal structure and 14.6% of a cubic crystal structure.

The first fired product, anhydrous lithium hydroxide as a second lithium raw material, and cobalt oxide as a coating raw material were mixed and heat-treated a second time at 780 °C for 16 hours. Herein, a molar ratio ($L^2$) of lithium in the second lithium raw material to the total metal excluding lithium in the first fired product was set to be 0.45, and also, a cobalt content was 0.5 wt% to 3.0 wt% based on 100 wt% of the total metal excluding lithium in the positive electrode active material.

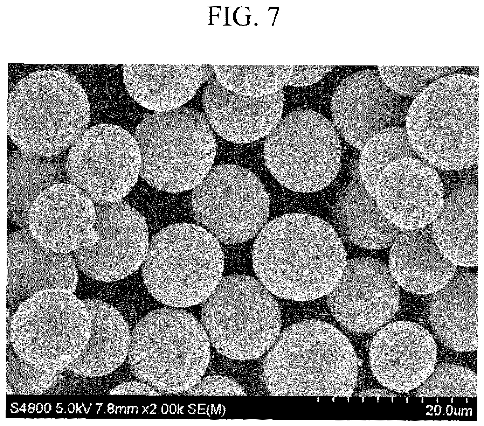

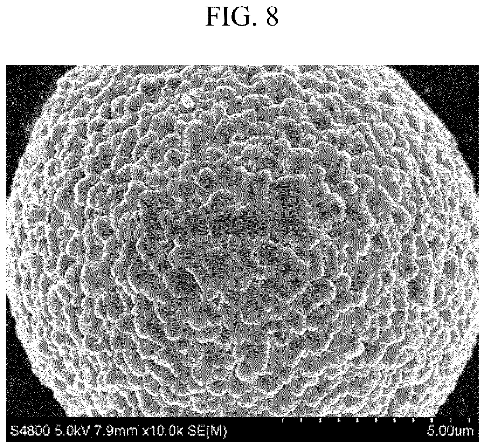

Through the second heat treatment, a positive electrode active material in the form of secondary particles was obtained. SEM images of the final positive electrode active material are shown in FIGS. 7 and 8. Referring to FIGS. 7 and 8, the positive electrode active material was confirmed to be in the form of secondary particles with a substantially uniform particle size and a clean surface. In addition, from XRD Rietveld Refinement analysis of the final positive electrode active material, the positive electrode active material was confirmed to have a hexagonal crystal structure of 100%.

### Residual Lithium and XRD Analysis

The first fired product and the final positive electrode active material of the example were analyzed with respect to a content of residual lithium through a pH titration method, and an XRD analysis was performed to obtain a full width at half maximum (FWHM) on a (003) plane and a (104) plane, and a ratio of peak intensity of the (003) plane to the peak intensity of the (104) plane; the results are shown in Table 1.

Table 1:

|  | First fired product | Final positive electrode active material |
|---|---|---|
| LiOH (wt%) | 0.167 | 0.286 |
| $Li_2CO_3$ (wt%) | 0.244 | 0.364 |
| Residual Li (ppm) | 944 | 1512 |
| $FWHM_{(003)}$ | - | 0.132 |
| $FWHM_{(104)}$ | - | 0.144 |
| $I_{(003)}/I_{(104)}$ | 0.487 | 1.331 |

Referring to Table 1, in the final positive electrode active material, a content of the residual lithium was confirmed to be about 1512 ppm. In this Example, even though the high nickel-based positive electrode active material was synthesized without a washing process, the final positive electrode active material exhibited a substantially low residual lithium content.

In addition, referring to Table 1, the final positive electrode active material exhibited a $I_{(003)}/I_{(104)}$ ratio of 1.331 in the XRD analysis.

While this disclosure has been described in connection with what is presently considered to be practical example embodiments, it is to be understood that the disclosure is not limited to the disclosed example embodiments. On the contrary, this disclosure is intended to cover various modifications and equivalent arrangements included within the scope of the appended claims.

Embodiments are set out in the following clauses:

Clause 1. A method of preparing a positive electrode active material, the method comprising: (i) mixing a nickel-based precursor and a first lithium raw material, and performing a first heat treatment at a temperature range of 500 °C to 750 °C to prepare a first fired product, and (ii) mixing the first fired product and a second lithium raw material, and performing a second heat treatment at a temperature range of 650 °C to 850 °C to prepare a positive electrode active material in a form of secondary particles including a lithium nickel-based composite oxide, the secondary particles being formed by agglomerating a plurality of primary particles, wherein: (a) a molar ratio ($L^1$) of lithium in the first lithium raw material to a total metal of the nickel-based precursor is in a range of 0.2 to 0.9, (b) a molar ratio ($L^2$) of lithium in the second lithium raw material to a total metal excluding lithium in the first fired product is in a range of 0.1 to 0.8, and (c) $0.9 \le L^1 + L^2 \le 1.1$.

Clause 2. The method of Clause 1, wherein: $L^1$ is in a range of 0.4 to 0.7, and $L^2$ is in a range of 0.3 to 0.6.

Clause 3. The method of Clause 1 or Clause 2, wherein $L^1 > L^2$ is satisfied.

Clause 4. The method of Clause 1 or Clause 2, wherein $L^1 \le L^2$ is satisfied.

Clause 5. The method of any preceding Clause, wherein the nickel-based precursor is represented by Chemical Formula 11 or Chemical Formula 12:

Chemical Formula 11 $\quad$ $Ni_{x11}M^{11}_{y11}M^{12}_{z11}(OH)_2$

wherein, in Chemical Formula 11, $0.7 \le x11 < 1$, $0 < y11 \le 0.3$, $0 \le z11 \le 0.3$, $0.9 \le x11 + y11 + z11 \le 1.1$, and $M^{11}$ and $M^{12}$ each independently comprise one or more of Al, B, Ba, Ca, Ce, Co, Cr, Cu, Fe, Mg, Mn, Mo, Nb, Si, Sn, Sr, Ti, V, W, Y, Zn, and Zr,

Chemical Formula 12 $\quad$ $Ni_{x1}2M^{13}_{y12}M^{14}_{z12}O_{2-b12}X_{b12}$

wherein, in Chemical Formula 12, $0.7 \le x12 < 1$, $0 < y12 \le 0.3$, $0 \le z12 \le 0.3$, $0.9 \le x12 + y12 + z12 \le 1.1$, $M^{13}$ and $M^{14}$ each independently comprise one or more of Al, B, Ba, Ca, Ce, Co, Cr, Cu, Fe, Mg, Mn, Mo, Nb, Si, Sn, Sr, Ti, V, W, Y, Zn, and Zr, and X comprises at least one of F, P, and S.

Clause 6. The method of any preceding Clause, wherein: the nickel-based precursor is in the form of the secondary particles formed by agglomerating the plurality of primary particles, and an average particle diameter ($D_{50}$) of the secondary particles is 5 $\mu$m to 25 $\mu$m, and a difference between the average particle diameter ($D_{50}$) of the nickel-based precursor and the average particle diameter ($D_{50}$) of the final positive electrode active material is less than or equal to 1 $\mu$m.

Clause 7. The method of any preceding Clause, wherein the first lithium raw material and the second lithium raw material comprise anhydrous lithium hydroxide.

Clause 8. The method of any preceding Clause, wherein: the first heat treatment is performed in a temperature range of 550 °C to 750 °C for 6 hours to 12 hours in an oxidizing atmosphere, and a first heat treatment temperature is lower than a second heat treatment temperature.

Clause 9. The method of any preceding Clause, wherein: mixing the nickel-based precursor and the first lithium raw material comprises mixing zirconium raw material with the nickel-based precursor and the first lithium raw material, and a zirconium content of the zirconium raw material is in a range of 0.01 mol% to 1 mol% based on 100 mol% of a total metal of the nickel-based precursor and the zirconium of the zirconium raw material.

Clause 10. The method of any preceding Clause, wherein the first fired product is in a form of secondary particles formed by agglomerating a plurality of primary particles, and an average particle diameter ($D_{50}$) of the secondary particle is in a range of 5 $\mu$m to 25 $\mu$m.

Clause 11. The method of any preceding Clause, wherein the first fired product comprises a lithium nickel-based composite oxide, and the lithium nickel-based composite oxide comprises 60% to 95% of a hexagonal crystal structure and 5% to 40% of a cubic crystal structure.

Clause 12. The method of any preceding Clause, wherein the second heat treatment is performed at a temperature of 750 °C to 810 °C for 10 hours to 16 hours in an oxidizing atmosphere.

Clause 13. The method of any preceding Clause, wherein: mixing the first fired product and the second lithium raw material comprises mixing a coating raw material with the first fired product and the second lithium raw material, and (b) the coating raw material includes one or more of Al, B, Co, Mg, V, Zn, and Zr.

Clause 14. The method of any preceding Clause, wherein the positive electrode active material is prepared without washing the positive electrode active material with water.

Clause 15. The method of any preceding Clause, wherein the prepared positive electrode active material is represented by Chemical Formula 1:

$$\underline{\text{Chemical Formula 1}} \qquad Li_{a1}Ni_{x1}M^1_{y1}M^2_{z1}O_{2-b1}X_{b1}$$

wherein, in Chemical Formula 1, $0.8 \leq a1 \leq 1.2$, $0.7 \leq x1 < 1$, $0 < y1 \leq 0.3$, $0 \leq z1 \leq 0.3$, $0.9 \leq x1+y1+z1 \leq 1.1$, and $0 \leq b1 \leq 0.1$, $M^1$ and $M^2$ each independently comprise at least one of Al, B, Ba, Ca, Ce, Co, Cr, Cu, Fe, Mg, Mn, Mo, Nb, Si, Sn, Sr, Ti, V, W, Y, Zn, and Zr, and X comprises at least one of F, P, and S.

Clause 16. The method of any preceding Clause, wherein an average particle diameter ($D_{50}$) of the secondary particles of the prepared positive electrode active material is in a range of 5 $\mu$m to 25 $\mu$m, a BET specific surface area is in a range of 0.2 m²/g to 0.7 m²/g, and a residual lithium content on the surface is less than or equal to 2000 ppm.

Clause 17. The method of any preceding Clause, wherein a pellet density of the prepared positive electrode active material is in a range of 3.0 g/cc to 3.6 g/cc, and the tap density of the prepared positive electrode active material is in a range of 1.2 g/cc to 2.2 g/cc.

Clause 18. The method of any preceding Clause, wherein the prepared positive electrode active material has a ratio of a peak intensity of a (003) plane to a peak intensity of a (104) plane in X-ray diffraction analysis that is greater than or equal to 1.15.

Clause 19. The method of any preceding Clause, further comprising: (iii) mixing the prepared positive electrode active material and a coating raw material, and subjecting the mixed prepared positive electrode active material and coating raw material to a third heat treatment, wherein the coating raw material includes one or more of Al, B, Co, Mg, V, Zn, and Zr.

Clause 20. A rechargeable lithium battery, comprising: (a) a positive electrode including the positive electrode active material prepared according to the method of any of Clauses 1 to 19, (b) a negative electrode, and (c) an electrolyte.

**Description of Symbols**

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

**Claims**

1. A method of preparing a positive electrode active material, the method comprising:

    (i) mixing a nickel-based precursor and a first lithium raw material, and performing a first heat treatment at a temperature range of 500 °C to 750 °C to prepare a first fired product, and
    (ii) mixing the first fired product and a second lithium raw material, and performing a second heat treatment at a temperature range of 650 °C to 850 °C to prepare a positive electrode active material in a form of secondary particles including a lithium nickel-based composite oxide, the secondary particles being formed by agglomerating a plurality of primary particles,

    wherein:

    a molar ratio ($L^1$) of lithium in the first lithium raw material to a total metal of the nickel-based precursor is in a range of 0.2 to 0.9,
    a molar ratio ($L^2$) of lithium in the second lithium raw material to a total metal excluding lithium in the first fired product is in a range of 0.1 to 0.8, and

    $$0.9 \leq L^1 + L^2 \leq 1.1.$$

2. The method as claimed in claim 1, wherein:

    $L^1$ is in a range of 0.4 to 0.7, and
    $L^2$ is in a range of 0.3 to 0.6,
    optionally wherein either (a) $L^1 > L^2$ is satisfied or (b) $L^1 \leq L^2$ is satisfied.

3. The method as claimed in claim 1 or claim 2, wherein:

    the nickel-based precursor is represented by Chemical Formula 11 or Chemical Formula 12:

    <u>Chemical Formula 11</u>        $Ni_{x11}M^{11}_{y11}M^{12}_{z11}(OH)_2$

    wherein, in Chemical Formula 11, $0.7 \leq x11 < 1$, $0 < y11 \leq 0.3$, $0 \leq z11 \leq 0.3$, $0.9 \leq x11+y11+z11 \leq 1.1$, and $M^{11}$ and $M^{12}$ each independently comprise one or more of Al, B, Ba, Ca, Ce, Co, Cr, Cu, Fe, Mg, Mn, Mo, Nb, Si, Sn, Sr, Ti, V, W, Y, Zn, and Zr,

    <u>Chemical Formula 12</u>        $Ni_{x1}2M^{13}y_{12}M^{14}_{z12}O_{2-b12}X_{b12}$

    wherein, in Chemical Formula 12, $0.7 \leq x12 < 1$, $0 < y12 \leq 0.3$, $0 \leq z12 \leq 0.3$, $0.9 \leq x12+y12+z12 \leq 1.1$, $0 \leq b12 \leq 0.1$, $M^{13}$ and $M^{14}$ each independently comprise one or more of Al, B, Ba, Ca, Ce, Co, Cr, Cu, Fe, Mg, Mn, Mo, Nb, Si, Sn, Sr, Ti, V, W, Y, Zn, and Zr, and X comprises at least one of F, P, and S.

4. The method as claimed in any preceding claim, wherein:

    the nickel-based precursor is in the form of the secondary particles formed by agglomerating the plurality of primary particles, and an average particle diameter ($D_{50}$) of the secondary particles is 5 μm to 25 μm, and
    a difference between the average particle diameter ($D_{50}$) of the nickel-based precursor and the average particle diameter ($D_{50}$) of the positive electrode active material is less than or equal to 1 μm.

5. The method as claimed in any preceding claim, wherein:
    the first lithium raw material and the second lithium raw material comprise anhydrous lithium hydroxide.

6. The method as claimed in any preceding claim, wherein:

    the first heat treatment is performed in a temperature range of 550 °C to 750 °C for 6 hours to 12 hours in an oxidizing atmosphere, and
    the first heat treatment temperature is lower than the second heat treatment temperature.

7. The method as claimed in any preceding claim, wherein:

mixing the nickel-based precursor and the first lithium raw material comprises mixing zirconium raw material with the nickel-based precursor and the first lithium raw material, and
a zirconium content of the zirconium raw material is in a range of 0.01 wt% to 1 wt% based on 100 wt% of a total metal of the nickel-based precursor and the zirconium of the zirconium raw material.

8. The method as claimed in any preceding claim, wherein:

(a) the first fired product is in a form of secondary particles formed by agglomerating a plurality of primary particles, and
an average particle diameter ($D_{50}$) of the secondary particle is in a range of 5 $\mu$m to 25 $\mu$m, and/or
(b) the first fired product comprises a lithium nickel-based composite oxide, and
the lithium nickel-based composite oxide comprises 60 vol% to 95 vol% of a hexagonal crystal structure and 5 vol% to 40 vol% of a cubic crystal structure.

9. The method as claimed in any preceding claim, wherein:
the second heat treatment is performed at a temperature of 750 °C to 810 °C for 10 hours to 16 hours in an oxidizing atmosphere.

10. The method as claimed in any preceding claim, wherein:

mixing the first fired product and the second lithium raw material comprises mixing a coating raw material with the first fired product and the second lithium raw material, and
the coating raw material includes one or more of Al, B, Co, Mg, V, Zn, and Zr.

11. The method as claimed in any preceding claim, wherein:

(a) the positive electrode active material is prepared without washing the positive electrode active material with water, and/or
(b) the method further comprises (iii) mixing the prepared positive electrode active material and a coating raw material, and

subjecting the mixed prepared positive electrode active material and coating raw material to a third heat treatment,
wherein the coating raw material includes one or more of Al, B, Co, Mg, V, Zn, and Zr.

12. The method as claimed in any preceding claim, wherein:

the prepared positive electrode active material is represented by Chemical Formula 1:

$$\underline{\text{Chemical Formula 1}} \qquad \text{Li}_{a1}\text{Ni}_{x1}\text{M}^1{}_{y1}\text{M}^2{}_{z1}\text{O}_{2-b1}\text{X}_{b1}$$

wherein, in Chemical Formula 1, $0.8 \le a1 \le 1.2$, $0.7 \le x1 < 1$, $0 < y1 \le 0.3$, $0 \le z1 \le 0.3$, $0.9 \le x1+y1+z1 \le 1.1$, and $0 \le b1 \le 0.1$, $\text{M}^1$ and $\text{M}^2$ each independently comprise at least one of Al, B, Ba, Ca, Ce, Co, Cr, Cu, Fe, Mg, Mn, Mo, Nb, Si, Sn, Sr, Ti, V, W, Y, Zn, and Zr, and X comprises at least one of F, P, and S.

13. The method as claimed in any preceding claim, wherein:

(a) an average particle diameter ($D_{50}$) of the secondary particles of the prepared positive electrode active material is in a range of 5 $\mu$m to 25 $\mu$m, a BET specific surface area is in a range of 0.2 $m^2/g$ to 0.7 $m^2/g$, and a residual lithium content on the surface is less than or equal to 2000 ppm, and/or
(b) a pellet density of the prepared positive electrode active material is in a range of 3.0 g/cc to 3.6 g/cc, and the tap density of the prepared positive electrode active material is in a range of 1.2 g/cc to 2.2 g/cc, and/or
(c) the prepared positive electrode active material has a ratio of a peak intensity of a (003) plane to a peak intensity of a (104) plane in X-ray diffraction analysis that is greater than or equal to 1.15.

14. A positive electrode for a rechargeable lithium battery, comprising:

a positive electrode current collector; and

the positive electrode active material prepared according to the method as claimed in any of claims 1 to 13 as a layer on the positive electrode current collector.

15. A rechargeable lithium battery, comprising:

the positive electrode claimed in claim 14,
a negative electrode, and
an electrolyte.

FIG. 1

# FIG. 2

EP 4 640 638 A1

# FIG. 3

# FIG. 4

FIG. 5

S4800 5.0kV 7.9mm x10.0k SE(M)          5.00um

## FIG. 6

Rietveld Refinement (Li/TM = 0.6)

Legend:
- $Y_{obs}$
- $Y_{calc}$
- $Y_{obs} - Y_{calc}$
- Bragg position

**Hexagonal(R-3m) 85.4%**
**Cubic(Fm-3m) 14.6%**

X-axis: $2\theta$ (°)
Y-axis: Intensity (arb. units)

FIG. 7

S4800 5.0kV 7.8mm x2.00k SE(M)          20.0um

# FIG. 8

S4800 5.0kV 7.9mm x10.0k SE(M)                    5.00um

Europäisches
Patentamt
European
Patent Office
Office européen
des brevets

**EUROPEAN SEARCH REPORT**

Application Number

EP 25 16 3072

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2018/158078 A1 (UMICORE NV [BE]; UMICORE KOREA LTD [KR]) 7 September 2018 (2018-09-07) * examples * * claims * * page 14, line 15 - line 16 * | 1-15 | INV. C01G53/506 H01M4/525 |
| X | EP 4 098 626 A1 (SAMSUNG SDI CO LTD [KR]) 7 December 2022 (2022-12-07) | 14,15 | |
| A | * examples * * claims * | 1-13 | |
| X | EP 4 266 407 A1 (POSCO HOLDINGS INC [KR]; RES INST IND SCIENCE & TECH [KR] ET AL.) 25 October 2023 (2023-10-25) | 14,15 | |
| A | * examples * * claims * | 1-13 | |
| X | US 2020/112024 A1 (SHIN DONGWOOK [KR] ET AL) 9 April 2020 (2020-04-09) | 14,15 | |
| A | * examples * * claims * | 1-13 | TECHNICAL FIELDS SEARCHED (IPC) C01G H01M |

The present search report has been drawn up for all claims

| Place of search | Date of completion of the search | Examiner |
|---|---|---|
| Munich | 11 September 2025 | Omegna, Anna |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
................................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 16 3072

This annex lists the patent family members relating to the patent documents cited in the above-mentioned European search report.
The members are as contained in the European Patent Office EDP file on
The European Patent Office is in no way liable for these particulars which are merely given for the purpose of information.

11-09-2025

| Patent document cited in search report | | | Publication date | Patent family member(s) | | | Publication date |
|---|---|---|---|---|---|---|---|
| WO 2018158078 | A1 | | 07-09-2018 | CN | 110662717 | A | 07-01-2020 |
| | | | | EP | 3589585 | A1 | 08-01-2020 |
| | | | | JP | 6856763 | B2 | 14-04-2021 |
| | | | | JP | 2020510971 | A | 09-04-2020 |
| | | | | KR | 20190125405 | A | 06-11-2019 |
| | | | | US | 2020006762 | A1 | 02-01-2020 |
| | | | | WO | 2018158078 | A1 | 07-09-2018 |
| EP 4098626 | A1 | | 07-12-2022 | CN | 115440948 | A | 06-12-2022 |
| | | | | EP | 4098626 | A1 | 07-12-2022 |
| | | | | KR | 20220163061 | A | 09-12-2022 |
| | | | | US | 2022388865 | A1 | 08-12-2022 |
| EP 4266407 | A1 | | 25-10-2023 | CN | 116802842 | A | 22-09-2023 |
| | | | | EP | 4266407 | A1 | 25-10-2023 |
| | | | | JP | 2024500898 | A | 10-01-2024 |
| | | | | KR | 20220089183 | A | 28-06-2022 |
| | | | | US | 2024063385 | A1 | 22-02-2024 |
| | | | | WO | 2022139290 | A1 | 30-06-2022 |
| US 2020112024 | A1 | | 09-04-2020 | CN | 111009640 | A | 14-04-2020 |
| | | | | EP | 3632851 | A1 | 08-04-2020 |
| | | | | JP | 7483296 | B2 | 15-05-2024 |
| | | | | JP | 2020061360 | A | 16-04-2020 |
| | | | | KR | 20200038661 | A | 14-04-2020 |
| | | | | US | 2020112024 | A1 | 09-04-2020 |
| | | | | US | 2024258517 | A1 | 01-08-2024 |

EPO FORM P0459

For more details about this annex : see Official Journal of the European Patent Office, No. 12/82